# EUROPEAN PATENT SPECIFICATION

(11) **EP 1 516 795 B1**
(45) Date of publication and mention of the grant of the patent: **04.07.2007**
(21) Application number: 04104466.0
(22) Date of filing: 15.09.2004
(51) Int. Cl.: B60T 13/66

(54) **System for regulating the supply of power to a brake system**
System für das Regeln der Leistungsversorgung eines Bremssystems
Système à régulation de l'alimentation d'énergie pour une système de freinage

(30) Priority: 16.09.2003 US 663397
(43) Date of publication of application: 23.03.2005
(73) Proprietor: Haldex Brake Corporation, Kansas City, MO 64153 (US)
(72) Inventor: Koelzer, Robert L., MO 64060, Kearney (US)
(74) Representative: Grundmann, Dirk

(56) References cited:
- EP-A- 0 849 134
- US-A- 3 829 166
- US-A- 5 934 880
- US-A1- 2002 127 116
- US-B1- 6 174 033

## Description

### Field Of The invention

The present invention relates to system of regulating the rate at which power is supplied to a brake system. More specifically, the invention relates to a system employing a controller and an intermediate device, which is driven by an engine and which drives a brake power source, to regulate the rate at which the power source supplies power to the brake system.

### Background Of The invention

The principles governing the deceleration and stopping of a motor vehicle are generally well known. A moving vehicle possesses kinetic energy, which must be removed in order for the vehicle to slow or stop. This removal of kinetic energy is most generally achieved by converting this energy into heat via friction. Hence, if a driver of a vehicle desires to slow or stop a vehicle faster than the vehicle would normally slow or stop as a result of the frictional force between the vehicle's wheels and the road, an additional frictional force must be applied. This additional conversion of kinetic energy into heat is usually performed by applying a contact material-typically in the form of a block or a pad-to the rotating wheels or to discs attached to the axles. As friction is created and the kinetic energy is thereby converted into heat, the wheels slow down and eventually the vehicle stops.

In order to apply this contact material, a power supply is obviously required. Systems for supplying power to a brake system are also generally well known, and typically include a power source, such as a compressor or an electric generator, that is driven by the crankshaft of the vehicle's engine. Such an arrangement allows power to be continuously available, which may be required for a variety of reasons. For example, in cases where the power is utilized to engage the braking mechanism, such as by causing a caliper to pinch a rotating disc, a driver who wants to brake often or immediately on demand will always have the appropriate power available to power the caliper. Similarly, in cases where power is needed to disengage the braking mechanism, such as in the case where a caliper is normally biased against a rotating disc by a spring, which must be biased in the opposite direction by pressurized fluid in order to release the brakes, power can be supplied to the braking system continuously in order to keep the vehicle moving.

However, one disadvantage with this way of supplying power to the brake system occurs in vehicles that operate at low engine speeds for long periods of time, such as inter-city buses, school buses, and refuge trucks. As a result, the power supply must be very large in order to meet the overall needs of the vehicle's braking system.

What is desired, therefore, is a system of supplying power to a brake system that permits engines to run at low speeds for long periods of time. What is further desired is a system of supplying power to a brake system that does not require the use of a large power source. What is also desired is a system of supplying power to a brake system that conserves energy.
In the prior art from US-A-3,829,166 it is known a system for regulating the supply of power to a vehicle's brake system, comprising an engine, a brake power source, a brake system powered by said power source and a controller. Such known brake system comprises a shaft portion which is driven by an engine and sensed by a sensor pick-up which provides its signals to an electronic control means. The electronic control means produces control signals which actuate electromagnetic valves. A pressure accumulator is loaded by a pump which is driven by the engine. The control valves are interconnected between the pressure accumulator and a brake cylinder.
EP-A-0 849 134 discloses an engine operated brake system comprising a hydraulic pump driven by an engine, and a valve assembly for controlling hydraulic fluid streams from the pump to wheel cylinders.

### Summary Of The Invention

Accordingly, it is an object of the present invention to provide a system for regulating the supply of power to a brake system that does not require the use of a large power source in vehicles where the engine must run at low speeds for long periods of time.

It is a further object of the present invention to provide a system for regulating the supply of power to a brake system that conserves energy when the brake system does not require power.

To overcome the deficiencies of the prior art and to achieve at least some of the objects and advantages listed, the invention comprises a system for regulating the supply of power to a vehicle's brake system, including an engine, an intermediary device driven by the engine, a brake power source driven by the intermediary device, a brake system powered by the brake power source, and a controller in communication with the intermediary device, the controller, in response to a minimum engine speed, causing the intermediary device to drive the brake power source at a desired rate.

In another embodiment, the invention comprises a system for regulating the supply of power to a vehicle's brake system, including an engine, an intermediary device driven by the engine, a source of pressurized fluid driven by the intermediary device, a brake system powered by the source of pressurized fluid, and an electronic control unit in communication with the intermediary device, the controller, in response to a minimum engine speed, causing the intermediary device to drive the source of pressurized fluid at a desired rate.

In yet another embodiment, the invention comprises a system for regulating the supply of power to a vehicle's brake system, including an engine, an intermediary device driven by the engine, a source of electricity driven by the intermediary device, a brake system powered by the source of electricity, and an electronic control unit in communication with the intermediary device, the controller, in response to a minimum engine speed, causing the intermediary device to drive the source of electricity at a desired rate.

### Brief Description Of The Drawings

Figure 1 is a block diagram of a system for regulating the supply of power to a brake system in accordance with the invention.

Figure 2 is a block diagram of one specific embodiment of the system of Figure 1.

Figure 3 is a block diagram of another specific embodiment of the system of Figure 1.

Figure 4 is a block diagram of another specific embodiment of the system of Figure 2.

Figure 5 is a block diagram of another specific embodiment of the system of Figure 2.

Figure 6 is a block diagram of a specific embodiment of the system of Figure 5.

Figure 7 is a block diagram of another specific embodiment of the system of Figure 5.

Figure 8 is a block diagram of a specific embodiment of the system of Figure 5.

Figure 9 is a block diagram of a specific embodiment of the system of Figure 8.

### Detailed Description Of The Drawings

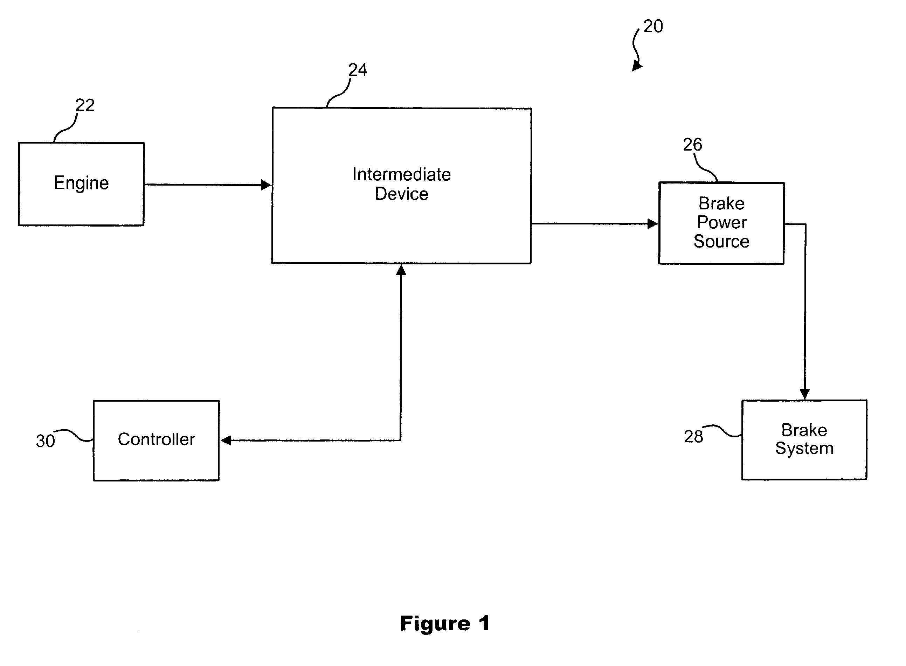

The basic components of one embodiment of a system 20 for regulating the supply of power to a vehicle's brake system in accordance with the invention are illustrated in Figure 1. Typically, the system 20 includes an engine 22, which drives an intermediate device 24, usually via crankshaft (not shown). The intermediate device 24, in turn, drives a brake power source 26, which supplies power to a brake system 28. A controller 30 communicates with the intermediate device 24 in order to regulate the rate at which the intermediate device drives the brake power source 26. In this way, the brake power source 26, though ultimately driven by the crankshaft of the engine 22, need not necessarily be driven at the same speed at which the crankshaft turns. Accordingly, the controller 30 can, in response to a minimum engine speed, cause the intermediate device 24 to drive the brake power source 26 at a desired rate.

Typically, the controller 30 is an electronic control unit (ECU). In certain embodiments, an operator of the vehicle can effect complete control over the electronic control unit 30, and thus, can directly regulate the rate at which the intermediate device 24 drives the brake power source 26. In other embodiments, the electronic control unit 30 has one or more inputs that effect the rate at which the brake power source 26 is driven, as is further explained below.

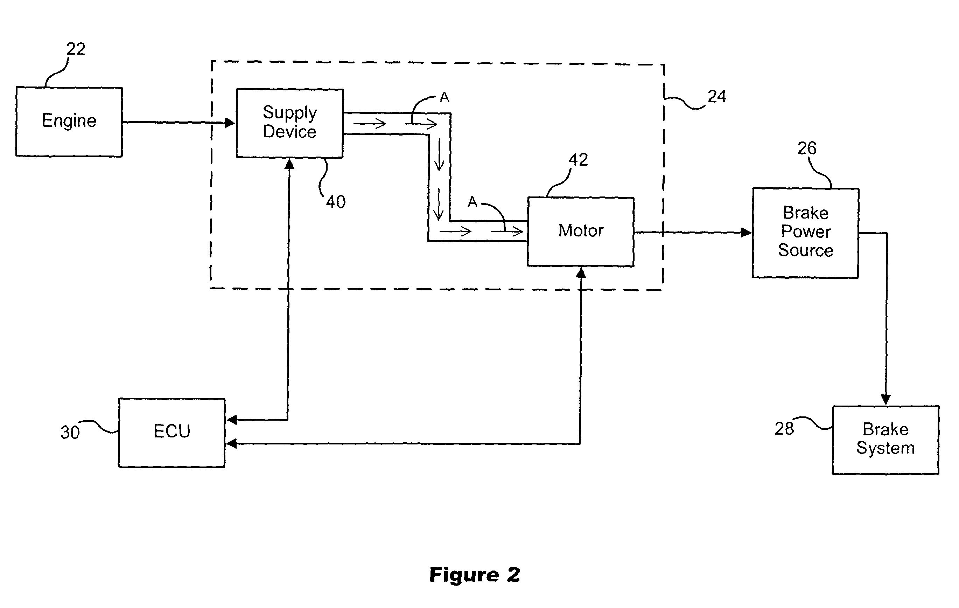

In certain embodiments, the intermediate device 24 includes two separately housed components. The basic components of one such embodiment of the intermediate device 24 are illustrated in Figure 2. In this embodiment, the intermediate device 24 includes a supply device 40 and a motor 42. The supply device 40, which is driven by the crankshaft of the engine 22, supplies an agency (indicated by arrows A), such as fluid or electricity, to the motor 42. The motor 42, which is driven by the agency, in turn, drives the brake power source 26. Accordingly, by regulating the amount of the agency that is supplied to the motor 42 by the device 40, the rate at which the brake power source 26 is driven is controlled.

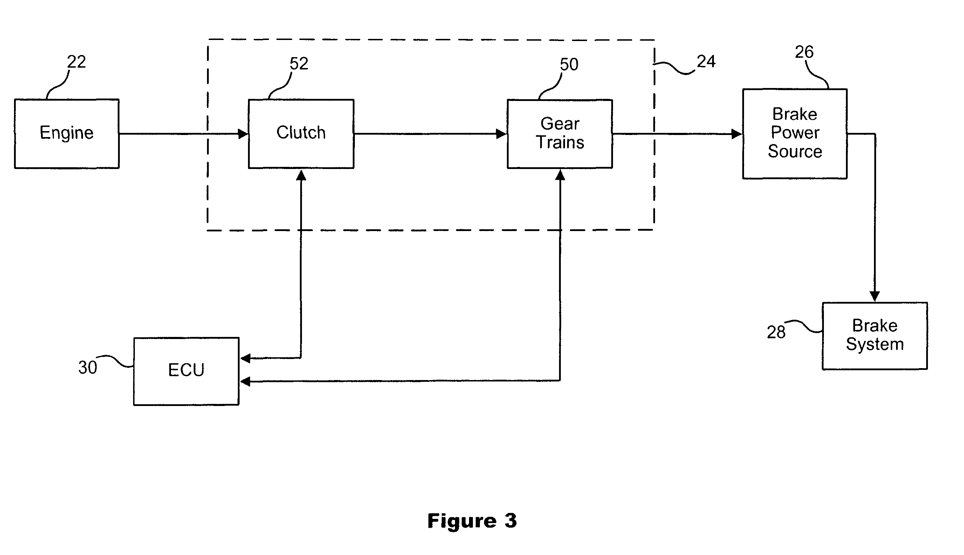

The basic components of another intermediate device 24 including two separately house components is illustrated in Figure 3. This embodiment employs an arrangement of at least two gear trains 50 that are capable of driving the brake power source 26. The crankshaft of the engine 22 is connectable to the gear trains via a clutch 52, thereby enabling a switch between the different gear trains 50. By controlling the connection between the engine 22 and the different gear trains 50. In this way, the speed at which the brake power source 26 is driven can be changed.

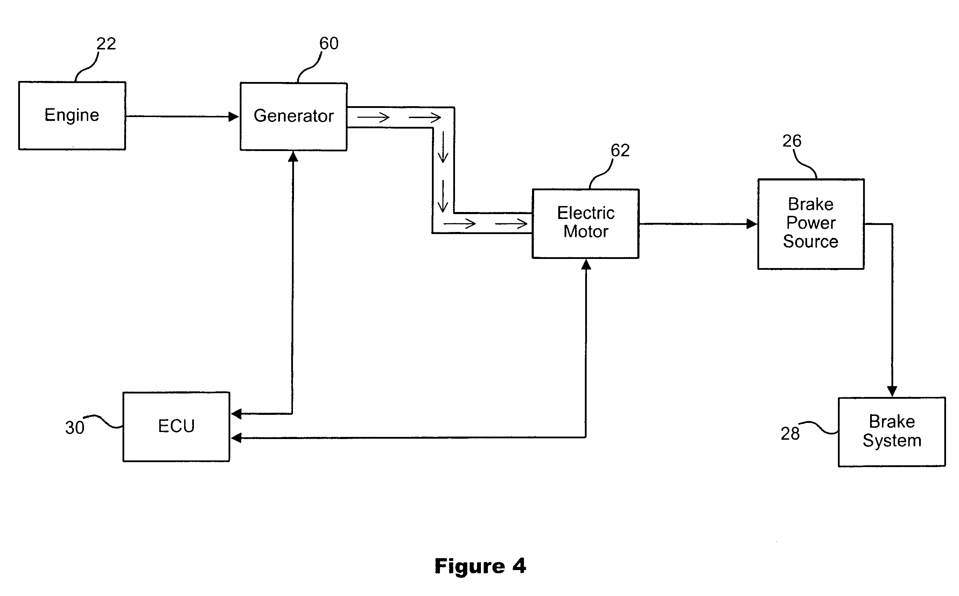

As illustrated in Figures 4-5, the arrangement in Figure 2 (i.e. the supply device and motor) may take one of several different forms. For example, as illustrated in Figure 4, the supply device may be a generator 60 for supplying electricity. In such cases, the motor is an electric motor 62, which is driven by the electricity supplied by the generator 60.

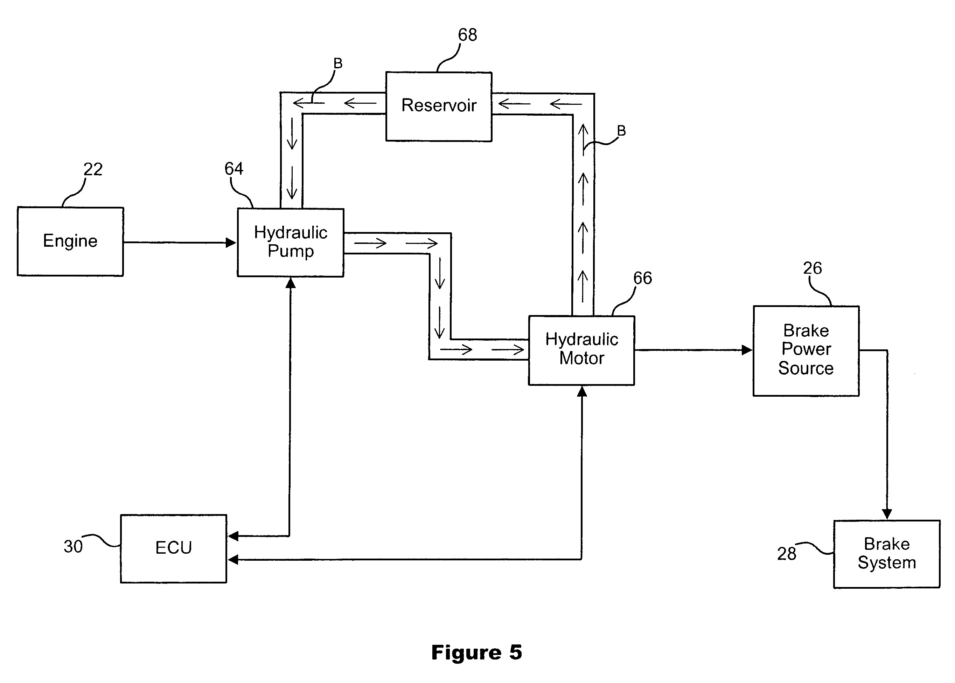

As another example, as illustrated in Figure 5, the supply device may be a hydraulic pump 64 for supplying a fluid. In these cases, the motor is a hydraulic motor, which is driven by the fluid supplied by the hydraulic pump. The fluid is repeatedly returned to the hydraulic pump 64 (indicated by arrows B) for continued use by the hydraulic pump 64 to drive the hydraulic motor 66. In some embodiments, a reservoir 68 is provided in order to further facilitate the recycling of fluid in this manner.

The electronic control unit 30 regulates the operation of either the pump 64 or the motor 66, or both, in order to control the speed at which the motor 66 drives the brake power source 26. In this way, the speed at which the brake power source 26 is driven can be controlled irrespective of the current engine speed.

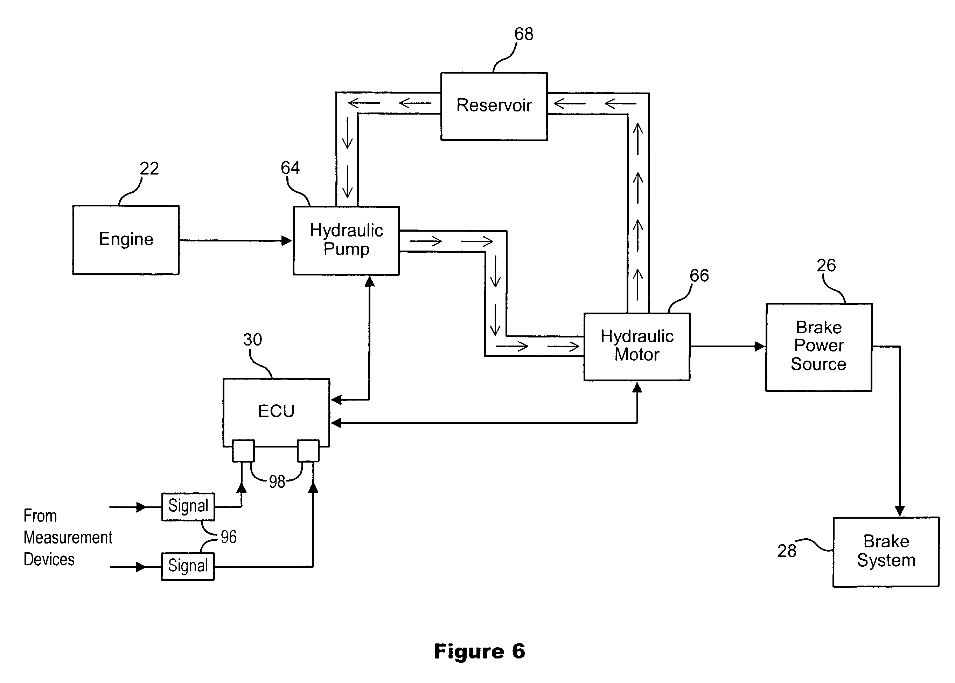

As illustrated in Figure 6, in certain advantageous embodiments, the electronic control unit 30 controls the rate at which the intermediate device 24 drives the brake power source 26 based on one or more inputs 96. Inputs 96 may be inputs for receiving signals 98 containing information of any kind that may be desired. For example, a signal 98 may contain information reflecting the revolutions per minute of the engine's crankshaft so that the ECU can determine if the vehicle is traveling uphill or downhill. Similarly, a signal 98 may contain information reflecting throttle position so that the ECU can determine if the vehicle's operator desires to accelerate or decelerate. Similarly, a signal 98 may contain information reflection the rate of rotation of at least one wheel of vehicle so that the ECU can determine the vehicle's speed. Other signals 98 may carry a variety of other types of information, such as, for example, information reflecting air pressure, voltage, or the temperature in an air dryer. In some embodiments, the electronic control unit 30 may include an input 96 for receiving information reflecting the performance of the intermediate device 24 itself. For example, in certain embodiments, the electronic control unit 30 may include an input 96 for receiving a signal 98 containing information reflecting the speed of motor 66.

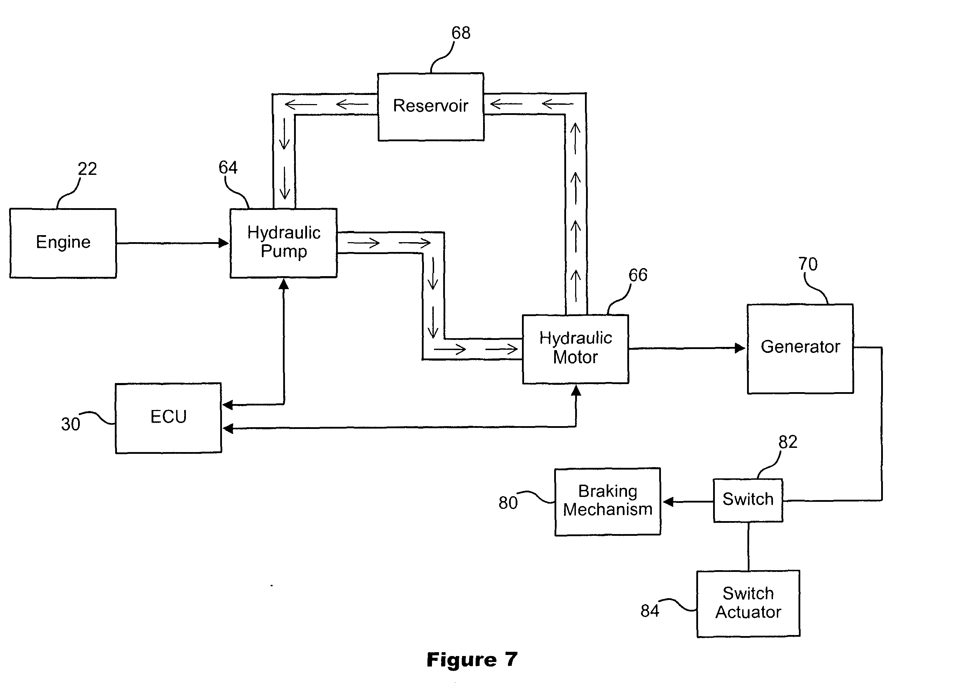

The brake power source 26 may be an electric, pneumatic, or other type of power source suitable for powering a brake system. For example, as illustrated in Figure 7, in some embodiments, brake power 26 is a generator 70 for generating electricity. In these embodiments, the electricity is transferred to the braking mechanism 80. In certain of these embodiments, the transfer of this electricity is initiated or terminated, either automatically or by the operator of a vehicle, by turning a switch 82 on or off with a switch actuator 84, such as, for example, a brake pedal.

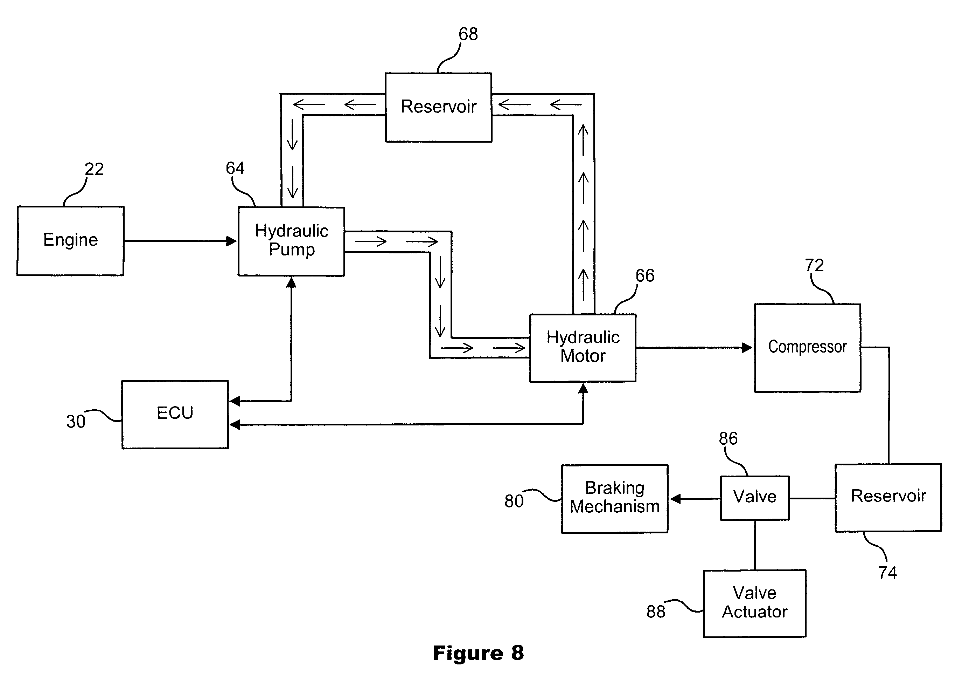

As illustrated in Figure 8, in other embodiments, the brake power source 26 may be an air compressor 72. One such compressor may be a swash plate piston compressor, such as that disclosed in U.S. Patent No. 6,439,857, incorporated herein by reference. As disclosed therein, a compressor of this type would typically include a swash plate housing at least partially enclosing a swash plate chamber mounted adjacent to a cylinder block having piston channels for receiving pistons that are coupled to a swash plate. The swash plate, which is disposed in the swash plate chamber, is mounted on shaft, as is an actuator for contacting the swash plate, such that the actuator, when in a first position, exerts a force on the swash plate appropriate to retain the swash plate in a position perpendicular to the drive shaft, such that the pistons remains idle, and, when in a second position, exerts a force on the swash plate appropriate to pivot the swash plate, thereby causing reciprocal motion of the pistons when the actuator rotates. In this embodiment, the shaft can be driven by the motor 66, irrespective of the speed of the engine 22.

In these embodiments, the air is transferred to the braking mechanism 80. In certain of these embodiments, the transfer of this air is initiated or terminated, either automatically or by the operator of a vehicle, by opening or closing a valve 86 with a valve actuator 88. In some of these embodiments, a reservoir 74 is provided in order to hold air compressed by the compressor 72 until it is needed, at which time the valve 86 is actuated with the valve actuator 88.

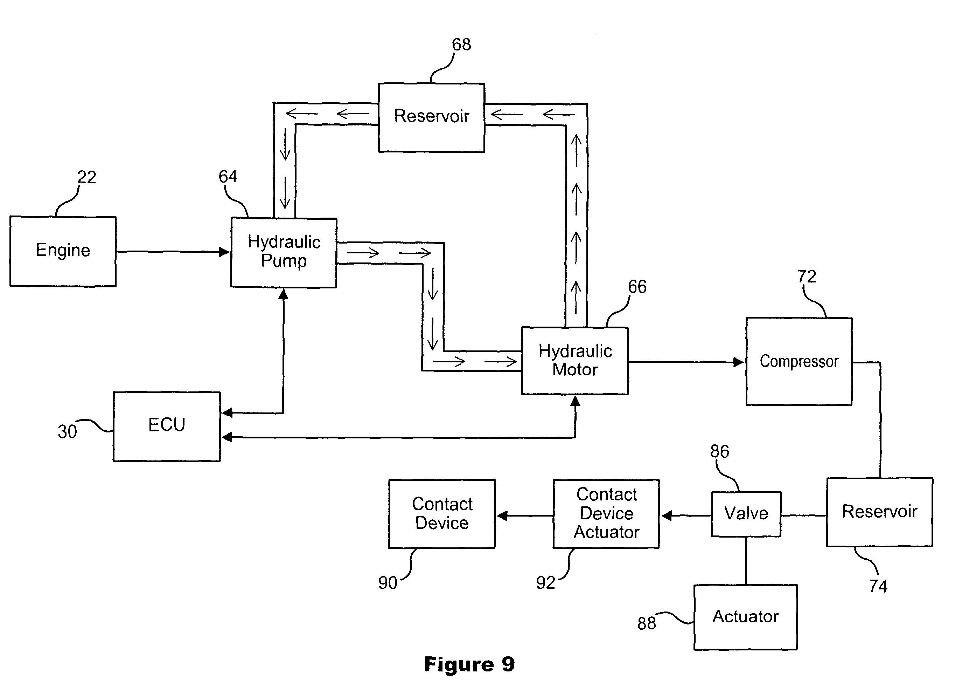

As illustrated in Figure 9, the braking mechanism 80 may include a contact device 90 comprising any mechanism for effecting a frictional force sufficient to slow, stop, or restrain the rotation of the vehicle's wheels. For example, in some embodiments, the contact device 90 includes a caliper, such as a fixed-caliper or floating-caliper, for contacting a rotor (not shown) connected to the hub of the vehicle's wheel, exerting a frictional force thereon, and thereby inhibiting the wheel's ability to rotate. In other embodiments, the contact device 90 includes a brake drum having brake shoes therein that are forced outwardly to exert a frictional force on the drum and similarly inhibit its rotation.

In certain advantageous embodiments, the braking mechanism 80 also includes a separate contact device actuator 92 for actuating the device that actually creates the frictional force. In these embodiments, the actuator 92 receives the power from the brake power supply and, powered by it, supplies power in another form to the contact device 90.

The control of the brake power source 26 in this manner will often be valuable for its ability to determine when power is supplied to the brake system 28, such as in cases where the power is used to actuate the contact device 90. However, it should be noted that this control of the brake power source 26 is also valuable for its ability to determine when power will not be supplied to the brake system 28. Such instances occur when the power supplied by the brake power source 26 is used to prevent the braking mechanism 80 from braking the vehicle, and the braking mechanism 80 is actuated by interrupting the flow of power from the brake power source 26, such as, for example, in the case of a spring actuator where, during normal operation of the vehicle, compressed air is used to bias the spring and thereby prevent the spring from exerting a force on the contact device 90, and thus, the spring is only able to actuate the contact device when the flow of compressed air is interrupted.

## Claims

1. A system (20) for regulating the supply of power to a vehicle's brake system (28), comprising:
an engine (22);
an intermediary device (24) driven by said engine (22);
a brake power source (26) driven by said intermediary device (24);
a brake system (28) powered by said brake power source (26); and
a controller (30) in communication with said intermediary device (24), said controller (30), in response to a minimum engine speed, causing said intermediary device (24) to drive said brake power source (26) at a desired rate.

2. The system as claimed in claim 1, wherein said controller (30) is an electronic control unit.

3. The system as claimed in claim 1, wherein said brake power source (26) is a source of pressurized fluid.

4. The system as claimed in claim 3, wherein said source of pressurized fluid is an air compressor (72).

5. The system as claimed in claim 4, wherein said air compressor (72) is a swash plate compressor.

6. The system as claimed in claim 5, wherein said compressor (72) comprises:
a cylinder block having at least one piston channel therein;
a swash plate housing mounted adjacent to said cylinder block;
a shaft disposed in said swash plate housing and cylinder block;
a swash plate mounted on said shaft;
at least one piston coupled to said swash plate and disposed in said at
least one piston channel and slidable therein; and
an actuator contacting said swash plate, such that said actuator, in a first position, exerts a force on said swash plate appropriate to retain said swash plate in a position perpendicular to said drive shaft, such that said at least one piston remains idle, and, in a second position, exerts a force on said swash plate appropriate to pivot said swash plate, thereby causing reciprocal motion of said at least one piston when said actuator rotates.

7. The system as claimed in claim 3, wherein said brake system (28) comprises:
a reservoir (74) for receiving the pressurized fluid from said source of pressurized fluid;
a braking mechanism (80);
a valve (86) connecting said reservoir (74) to said braking mechanism (80); and
a valve actuator (88) connected to said valve (86) for governing the flow of the pressurized fluid from said reservoir (74) to said braking mechanism (80).

8. The system as claimed in claim 7, wherein the vehicle includes a rotating surface and said braking mechanism (80) comprises:
a contact device (90) for contacting the rotating surface and thereby creating friction; and
a contact device actuator (92) for causing said contact device (90) to contact the rotating surface.

9. The system as claimed in claim 8, wherein said contact device (90) comprises a fixed caliper.

10. The system as claimed in claim 8, wherein said contact device (90) comprises a floating caliper.

11. The system as claimed in claim 8, wherein said contact device (90) comprises a brake shoe.

12. The system as claimed in claim 8, wherein said contact device actuator (92) comprises a piston.

13. The system as claimed in claim 8, wherein said contact device actuator (92) comprises a spring.

14. The system as claimed in claim 1, wherein said brake power source (26) is a source of electricity.

15. The system as claimed in claim 14, wherein said brake power source (26) is an electric generator.

16. The system as claimed in claim 14, wherein said brake system (28) comprises:
a braking mechanism (80);
a switch (82) connecting said source of electricity to said braking mechanism (80); and
a switch actuator (84) connected to said switch (82) for governing the flow of the electricity from said source of electricity to said braking mechanism (80).

17. The system as claimed in claim 16, wherein the vehicle includes a rotating surface and said braking mechanism (80) comprises a contact device (90) for contacting the rotating surface and thereby creating friction.

18. The system as claimed in claim 17, wherein said contact device (90) comprises a fixed caliper.

19. The system as claimed in claim 17, wherein said contact device (90) comprises a floating caliper.

20. The system as claimed in claim 17, wherein said contact device (90) comprises a brake shoe.

21. The system as claimed in claim 1, wherein said intermediate device (24) comprises at least two separately housed interconnected components.

22. The system as claimed in claim 21, wherein said intermediate device (24) comprises:
a supply device (40) driven by said engine (22) for supplying an agency; and
a motor (42) driven by the agency supplied by said supply device (40).

23. The system as claimed in claim 22, wherein:
said supply device (40) comprises a generator (60) for supplying electricity; and
said motor (42) comprises an electric motor (62) driven by the electricity.

24. The system as claimed in claim 22, wherein:
said supply device (40) comprises a hydraulic pump (64) for supplying fluid; and
said motor (42) comprises a hydraulic motor (66) driven by the fluid.

25. The system as claimed in claim 24, further comprising a reservoir (68) for receiving fluid from said motor (66) and from which said pump (64) receives the fluid.

26. The system as claimed in claim 21, wherein said intermediate device (24) comprises:
at least two gear trains (50); and
a clutch (52) for switching from one of said gear trains (50) to another of said gear trains (50).

27. The system as claimed in claim 1, wherein said controller (30) has at least one input (96) for receiving information, in response to which said controller (30) determines the rate at which to cause the intermediate device (24) to drive the brake power source (26).

28. The system as claimed in claim 27, wherein the at least one input (96) comprises an input (96) for receiving information reflecting the revolutions per minute of said engine's crankshaft.

29. The system as claimed in claim 27, wherein the at least one input (96) comprises an input (96) for receiving information reflecting throttle position.

30. The system as claimed in claim 27, wherein the at least one input (96) comprises an input (96) for receiving information reflecting the rate of rotation of at least one of the wheels.

31. The system as claimed in claim 27, wherein the at least one input (96) comprises an input (96) for receiving information reflecting air pressure.

32. The system as claimed in claim 27, wherein the at least one input (96) comprises an input (96) for receiving information reflecting voltage.

33. The system as claimed in claim 27, wherein the at least one input (96) comprises an input (96) for receiving information reflecting temperature in an air dryer.

34. The system as claimed in claim 27, wherein:
said intermediate device (24) comprises
a supply device (40) driven by said engine (22) for supplying an agency; and
a motor (42) driven by the agency supplied by said supply device (40); and
the at least one input (96) comprises an input (96) for receiving information reflecting the speed of said motor (42).

35. The system as claimed in claim 1, wherein:
the brake power source (26) is a source of pressurized fluid and the controller (30) is an electronic control unit.

36. The system as claimed in claim 35, wherein said intermediate device (24) comprises:
a generator (60) driven by said engine (22) for supplying electricity; and
an electric motor (62) driven by the electricity supplied by said generator (60).

37. The system as claimed in claim 35, wherein said intermediate device (24) comprises:
a hydraulic pump (64) driven by said engine (22) for supplying fluid; and
a hydraulic motor (66) driven by the fluid.

38. The system as claimed in claim 35, wherein said intermediate device (24) comprises:
at least two gear trains (50) driven by said engine (22); and
a clutch (52) for switching from one of said gear trains (50) to another of said gear trains (50).

39. The system as claimed in claim 1, wherein:
the brake power source (26) is a source of electricity and
the controller (30) is an electronic control unit.

40. The system as claimed in claim 39, wherein said intermediate device (24) comprises:
a hydraulic pump (64) driven by said engine (22) for supplying fluid; and
a hydraulic motor (66) driven by the fluid.

41. The system as claimed in claim 39, wherein said intermediate device (24) comprises:
at least two gear trains (50) driven by said engine (22); and
a clutch (52) for switching from one of said gear trains (50) to another of said gear trains (50).

## Patentansprüche

1. System (20) zur Regulierung der Lieferung von Leistung zu einem Fahrzeugbremssystem (28), umfassend:
einen Antrieb (22);
eine durch den Antrieb (22) angetriebene Zwischeneinrichtung (24);
eine durch die Zwischeneinrichtung (24) angetriebene Bremsleistungsquelle (26);
ein durch die Bremsleistungsquelle (26) leistungsversorgtes Bremssystem (28); und
einen Kontroller (30) in Kommunikation mit der Zwischeneinrichtung (24), wobei der Kontroller (30) als Antwort auf eine Mindestantriebsgeschwindigkeit die Zwischeneinrichtung (24) veranlasst, die Bremsleistungsquelle (26) zu einem gewünschten Grad anzutreiben.

2. System, wie in Anspruch 1 beansprucht, wobei der Kontroller (30) eine elektronische Kontrolleinheit ist.

3. System, wie in Anspruch 1 beansprucht, wobei die Bremsleistungsquelle (26) eine Druckfluidquelle ist.

4. System, wie in Anspruch 3 beansprucht, wobei die Druckfluidquelle ein Luftkompressor (72) ist.

5. System, wie in Anspruch 4 beansprucht, wobei der Luftkompressor (72) ein Taumelscheibenkompressor ist.

6. System, wie in Anspruch 5 beansprucht, wobei der Kompressor (72) umfasst:
einen Zylinderblock, der darin zumindest einen Kolbenkanal aufweist; ein benachbart zu dem Zylinderblock montiertes Taumelscheibengehäuse; eine in dem Taumelscheibengehäuse und Zylinderblock angeordnete Welle;
eine auf der Welle montierte Taumelscheibe;
zumindest einen Kolben, der mit der Taumelscheibe gekoppelt ist und in dem zumindest ein Kolbenkanal darin verschiebbar angeordnet ist; und
einen Aktuator, der die Taumelscheibe kontaktiert, so dass der Aktuator in einer ersten Position eine Kraft auf die Taumelscheibe ausübt, die geeignet ist, um die Taumelscheibe in einer zu der Antriebswelle senkrechten Position zu halten, so dass zumindest ein Kolben untätig bleibt, und in einer zweiten Position eine Kraft auf die Taumelscheibe ausübt, die geeignet ist, die Taumelscheibe zu drehen, wobei, wenn der Aktuator rotiert, eine wechselseitige Bewegung des zumindest einen Kolbens verursacht wird.

7. System, wie in Anspruch 3 beansprucht, wobei das Bremssystem (28) umfasst:
ein Reservoir (74) zur Aufnahme des Druckfluids von der Druckfluidquelle;
einen Bremsmechanismus (80);
ein Ventil (86), das das Reservoir (74) mit dem Bremsmechanismus (80) verbindet und
einen Ventilaktuator (88), der mit dem Ventil (86) verbunden ist, zur Leitung des Flusses von Druckfluid von dem Reservoir (74) zu dem Bremsmechanismus (80).

8. System, wie in Anspruch 7 beansprucht, wobei das Fahrzeug eine rotierende Oberfläche aufweist und der Bremsmechanismus (80) umfasst:
eine Kontaktvorrichtung (90) zur Kontaktierung der rotierenden Oberfläche und dadurch Reibungserzeugung; und
einen Kontaktvorrichtungsaktuator (92), um die Kontaktvorrichtung (90) zu veranlassen, die rotierende Oberfläche zu kontaktieren.

9. System, wie in Anspruch 8 beansprucht, wobei die Kontaktvorrichtung (90) einen festen Bremssattel umfasst.

10. System, wie in Anspruch 8 beansprucht, wobei die Kontaktvorrichtung (90) einen schwebenden Bremssattel umfasst.

11. System, wie in Anspruch 8 beansprucht, wobei die Kontaktvorrichtung (90) einen Bremsschuh umfasst.

12. System, wie in Anspruch 8 beansprucht, wobei der Kontaktvorrichtungsaktuator (92) einen Kolben umfasst.

13. System, wie in Anspruch 8 beansprucht, wobei der Kontaktvorrichtungsaktuator (92) eine Feder umfasst.

14. System, wie in Anspruch 1 beansprucht, wobei die Bremsleistungsquelle (26) eine Elektrizitätsquelle ist.

15. System, wie in Anspruch 14 beansprucht, wobei die Bremsleistungsquelle (26) ein elektrischer Generator ist.

16. System, wie in Anspruch 14 beansprucht, wobei das Bremssystem (28) umfasst:
einen Bremsmechanismus (80);
einen Schalter (82), der die Elektrizitätsquelle mit dem Bremsmechanismus (80) verbindet; und
einen Schalteraktuator (84), der mit dem Schalter (82) verbunden ist, zur Bestimmung des Elektrizitätsflusses von der Elektrizitätsquelle zu dem Bremsmechanismus (80);

17. System, wie in Anspruch 16 beansprucht, wobei das Fahrzeug eine rotierende Oberfläche aufweist und der Bremsmechanismus (80) eine Kontaktvorrichtung (90) umfasst zur Kontaktierung der rotierenden Oberfläche und dadurch Reibungserzeugung.

18. System, wie in Anspruch 17 beansprucht, wobei die Kontaktvorrichtung (90) einen festen Bremssattel umfasst.

19. System, wie in Anspruch 17 beansprucht, wobei die Kontaktvorrichtung (90) einen schwebenden Bremssattel umfasst.

20. System, wie in Anspruch 17 beansprucht, wobei die Kontaktvorrichtung (90) einen Bremsschuh umfasst.

21. System, wie in Anspruch 1 beansprucht, wobei die Zwischeneinrichtung (24) zumindest zwei separat eingebaute, verbundene Komponenten umfasst.

22. System, wie in Anspruch 21 beansprucht, wobei die Zwischeneinrichtung (24) umfasst:
eine durch den Antrieb (22) angetriebene Liefereinrichtung (40) zum Liefern eines Trägers; und
einen Motor (42), angetrieben durch den durch die Liefereinrichtung (40)
gelieferten Träger.

23. System, wie in Anspruch 22 beansprucht, wobei:
die Liefereinrichtung (40) einen Generator (60) umfasst zur Lieferung von Elektrizität; und
der Motor (42) einen durch die Elektrizität angetriebenen elektrischen Motor (62) umfasst.

24. System, wie in Anspruch 22 beansprucht, wobei:
die Liefereinrichtung (40) eine Hydraulikpumpe (64) zur Fluidlieferung umfasst; und
der Motor (42) einen durch das Fluid angetriebenen hydraulischen Motor (66) umfasst.

25. System, wie in Anspruch 24 beansprucht, weiter umfassend ein Reservoir (68) zur Aufnahme von Fluid von dem Motor (66) und von welchem die Pumpe (64) das Fluid erhält.

26. System, wie in Anspruch 21 beansprucht, wobei die Zwischeneinrichtung (24) umfasst:
zumindest zwei Getriebezüge (50); und
eine Kupplung (52) zum Schalten von einem der Getriebezüge (50) zu einem anderen der Getriebezüge (50).

27. System, wie in Anspruch 1 beansprucht, wobei der Kontroller (30) zumindest einen Eingang (96) aufweist zum Empfangen von Information, in Antwort auf welche der Kontroller (30) den Grad bestimmt, zu welchem die Zwischeneinrichtung (24) zum Antreiben der Bremsleistungsquelle (26) zu veranlassen ist.

28. System, wie in Anspruch 27 beansprucht, wobei der zumindest eine Eingang (96) einen Eingang (96) zum Empfangen von Information, welche die Umdrehungen pro Minute der Antriebskurbelwelle reflektiert, umfasst.

29. System, wie in Anspruch 27 beansprucht, wobei der zumindest eine Eingang (96) einen Eingang (96) zum Empfangen von Information, welche die Gaspedalposition reflektiert, umfasst.

30. System, wie in Anspruch 27 beansprucht, wobei der zumindest eine Eingang (96) einen Eingang (96) zum Empfangen von Information, welche die Rotationsrate von zumindest einem der Räder reflektiert, umfasst.

31. System, wie in Anspruch 27 beansprucht, wobei der zumindest eine Eingang (96) einen Eingang (96) zum Empfangen von Information, welche Luftdruck reflektiert, umfasst.

32. System, wie in Anspruch 27 beansprucht, wobei der zumindest eine Eingang (96) einen Eingang (96) zum Empfangen von Information, welche Spannung reflektiert, umfasst.

33. System, wie in Anspruch 27 beansprucht, wobei der zumindest eine Eingang (96) einen Eingang (96) zum Empfangen von Information, welche die Temperatur in einem Lufttrockner reflektiert, umfasst.

34. System, wie in Anspruch 27 beansprucht, wobei:
die Zwischeneinrichtung (24) umfasst:
eine Liefereinrichtung (40), die von dem Antrieb (22) zur Lieferung eines Trägers angetrieben wird, und
einen Motor (42), der durch den von der Liefereinrichtung gelieferten Träger angetrieben wird, und
der zumindest eine Eingang (96) umfasst einen Eingang (96) zum Empfangen von Information, welche die Geschwindigkeit des Motors (42) reflektiert.

35. System, wie in Anspruch 1 beansprucht, wobei die Bremsleistungsquelle (26) eine Druckfluidquelle ist und der Kontroller (30) eine elektronische Kontrolleinheit ist.

36. System, wie in Anspruch 35 beansprucht, wobei die Zwischeneinrichtung (24) umfasst:
einen Generator (60), der durch den Antrieb (22) zur Lieferung von Elektrizität angetrieben wird; und
einen elektrischen Motor (62), der durch die durch den Generator (60) gelieferte Elektrizität angetrieben wird.

37. System, wie in Anspruch 35 beansprucht, wobei die Zwischeneinrichtung (24) umfasst:
eine hydraulische Pumpe (64), die durch den Antrieb (22) zur Lieferung von Fluid angetrieben wird; und
einen hydraulischen Motor (66), der durch das Fluid angetrieben wird.

38. System, wie in Anspruch 35 beansprucht, wobei die Zwischeneinrichtung (24) umfasst:
zumindest zwei Getriebezüge (50), die durch den Antrieb (72) angetrieben werden; und
eine Kupplung (52) zum Schalten von einem der Getriebezüge (50) zu einem anderen der Getriebezüge (50).

39. System, wie in Anspruch 1 beansprucht, wobei:
die Bremsleistungsquelle (60) eine Elektrizitätsquelle ist und
der Kontroller (30) eine elektronische Kontrolleinheit ist.

40. System, wie in Anspruch 39 beansprucht, wobei die Zwischeneinrichtung (24) umfasst:
eine hydraulische Pumpe (64), die durch den Antrieb (22) zur Lieferung von Fluid angetrieben wird; und
einen hydraulischen Motor (66), der durch das Fluid angetrieben wird.

41. System, wie in Anspruch 39 beansprucht, wobei die Zwischeneinrichtung (24) umfasst:
zumindest zwei Getriebezüge (50), die durch den Antrieb (22) angetrieben werden; und
eine Kupplung (52) zum Schalten von einem der Getriebezüge (50) zu einem anderen der Getriebezüge (50).

## Revendications

1. Système (20) permettant de réguler l'alimentation en énergie d'un système de freinage de véhicule (28), comprenant :
un moteur (22) ;
un dispositif intermédiaire (24) entraîné par ledit moteur (22) ;
une source d'alimentation des freins (26) entraînée par ledit dispositif intermédiaire (24) ;
un système de freinage (28) alimenté par ladite source d'alimentation des freins (26) ; et
un contrôleur (30) en communication avec ledit dispositif intermédiaire (24), ledit contrôleur (30), en réponse à une vitesse minimum du moteur, amenant ledit dispositif intermédiaire (24) à entraîner ladite source d'alimentation des freins (26) à un régime désiré.

2. Système selon la revendication 1, dans lequel ledit contrôleur (30) est une unité de commande électronique.

3. Système selon la revendication 1, dans lequel ladite source d'alimentation des freins (26) est une source de fluide sous pression.

4. Système selon la revendication 3, dans lequel ladite source de fluide sous pression est un compresseur d'air (72).

5. Système selon la revendication 4, dans lequel ledit compresseur d'air (72) est un compresseur à plateau oscillant.

6. Système selon la revendication 5, dans lequel ledit compresseur (72) comprend :
un bloc cylindre ayant au moins un canal de piston à l'intérieur ;
un boîtier de plateau oscillant monté à côté dudit bloc cylindre ;
un arbre disposé dans ledit boîtier de plateau oscillant et ledit bloc cylindre ;
un plateau oscillant monté sur ledit arbre ;
au moins un piston couplé audit plateau oscillant et disposé dans ledit canal de piston au moins et pouvant coulisser à l'intérieur ; et
un actionneur en contact avec ledit plateau oscillant, de telle sorte que ledit actionneur, dans une première position, exerce une force sur ledit plateau oscillant appropriée pour retenir ledit plateau oscillant dans une position perpendiculaire audit arbre d'entraînement, de telle sorte que ledit piston au moins reste immobile, et, dans une seconde position, exerce une force sur ledit plateau oscillant appropriée pour faire pivoter ledit plateau oscillant, causant ainsi un mouvement réciproque dudit piston au moins, lorsque ledit actionneur est en rotation.

7. Système selon la revendication 3, dans lequel ledit système de freinage (28) comprend :
un réservoir (74) permettant de recevoir le fluide sous pression en provenance de ladite source de fluide sous pression ;
un mécanisme de freinage (90) ;
une valve (86) connectant ledit réservoir (74) audit mécanisme de freinage (80) ; et
un actionneur de valve (88) connecté à ladite valve (86) permettant de gérer le flux de fluide sous pression dudit réservoir (74) audit mécanisme de freinage (80).

8. Système selon la revendication 7, dans lequel le véhicule comprend une surface de rotation et ledit mécanisme de freinage (80) comprend :
un dispositif de contact (90) pouvant se mettre en contact avec la surface de rotation et créant ainsi une friction ; et
un actionneur de dispositif de contact (92) permettant d'amener ledit dispositif de contact (90) à se mettre en contact avec la surface de rotation.

9. Système selon la revendication 8, dans lequel ledit dispositif de contact (90) comprend un étrier fixe.

10. Système selon la revendication 8, dans lequel ledit dispositif de contact (90) comprend un étrier flottant.

11. Système selon la revendication 8, dans lequel ledit dispositif de contact (90) comprend un sabot de frein.

12. Système selon la revendication 8, dans lequel ledit actionneur de dispositif de contact (92) comprend un piston.

13. Système selon la revendication 8, dans lequel ledit actionneur de dispositif de contact (92) comprend un ressort.

14. Système selon la revendication 1, dans lequel ladite source d'alimentation des freins (26) est une source d'électricité.

15. Système selon la revendication 14, dans lequel ladite source d'alimentation des freins (26) est un générateur électrique.

16. Système selon la revendication 14, dans lequel ledit système de freinage (28) comprend :
un mécanisme de freinage (80) ;
un commutateur (82) connectant ladite source d'électricité audit mécanisme de freinage (80) ; et
un actionneur de commutateur (84) connecté audit commutateur (82) permettant de gérer le flux d'électricité de ladite source d'électricité audit mécanisme de freinage (80).

17. Système selon la revendication 16, dans lequel le véhicule comprend une surface de rotation et ledit mécanisme de freinage (80) comprend un dispositif de contact (90) pouvant se mettre en contact avec la surface de rotation et créant ainsi une friction.

18. Système selon la revendication 17, dans lequel ledit dispositif de contact (90) comprend un étrier fixe.

19. Système selon la revendication 17, dans lequel ledit dispositif de contact (90) comprend un étrier flottant.

20. Système selon la revendication 17, dans lequel ledit dispositif de contact (90) comprend un sabot de frein.

21. Système selon la revendication 1, dans lequel ledit dispositif intermédiaire (24) comprend au moins deux composants interconnectés logés séparément.

22. Système selon la revendication 21, dans lequel ledit dispositif intermédiaire (24) comprend :
un dispositif d'alimentation (40) entraîné par ledit moteur (22) permettant d'alimenter une agence ; et
un moteur (42) entraîné par l'agence alimentée par ledit dispositif d'alimentation (40).

23. Système selon la revendication 22, dans lequel :
ledit dispositif d'alimentation (40) comprend un générateur (60) permettant de fournir de l'électricité ; et
ledit moteur (42) comprend un moteur électrique (62) entraîné par l'électricité.

24. Système selon la revendication 22, dans lequel :
ledit dispositif d'alimentation (40) comprend une pompe hydraulique (64) permettant de fournir le fluide ; et
ledit moteur (42) comprend un moteur hydraulique (66) entraîné par le fluide.

25. Système selon la revendication 24, comprenant en outre un réservoir (68) permettant de recevoir le fluide en provenance dudit moteur (66) et en provenance duquel ladite pompe (64) reçoit le fluide.

26. Système selon la revendication 21, dans lequel ledit dispositif intermédiaire (24) comprend :
au moins deux trains d'engrenages (50) ; et
un embrayage (52) permettant de passer de l'un desdits trains d'engrenages (50) à l'autre desdits trains d'engrenages (50).

27. Système selon la revendication 1, dans lequel ledit contrôleur (30) a au moins une entrée (96) permettant de recevoir des informations, en réponse auxquelles ledit contrôleur (30) détermine le régime auquel il peut amener le dispositif intermédiaire (24) à entraîner la source d'alimentation des freins (26).

28. Système selon la revendication 27, dans lequel l'entrée au moins (96) comprend une entrée (96) permettant de recevoir des informations relatives aux révolutions par minute du vilebrequin dudit moteur.

29. Système selon la revendication 27, dans lequel l'entrée au moins (96) comprend une entrée (96) permettant de recevoir des informations relatives à la position du papillon d'accélérateur.

30. Système selon la revendication 27, dans lequel l'entrée au moins (96) comprend une entrée (96) permettant de recevoir des informations relatives au régime de rotation d'au moins une des roues.

31. Système selon la revendication 27, dans lequel l'entrée au moins (96) comprend une entrée (96) permettant de recevoir des informations relatives à la pression d'air.

32. Système selon la revendication 27, dans lequel l'entrée au moins (96) comprend une entrée (96) permettant de recevoir des informations relatives à la tension.

33. Système selon la revendication 27, dans lequel l'entrée au moins (96) comprend une entrée (96) permettant de recevoir des informations relatives à la température dans un déshydrateur d'air.

34. Système selon la revendication 27, dans lequel :
ledit dispositif intermédiaire (24) comprend
un dispositif d'alimentation (40) entraîné par ledit moteur (22) permettant d'alimenter une agence ; et
un moteur (42) entraîné par l'agence alimentée par ledit dispositif d'alimentation (40) ; et
l'entrée au moins (96) comprend une entrée (96) permettant de recevoir des informations relatives à la vitesse dudit moteur (42).

35. Système selon la revendication 1, dans lequel :
la source d'alimentation des freins (26) est une source de fluide sous pression et le contrôleur (30) est une unité de commande électronique.

36. Système selon la revendication 35, dans lequel ledit dispositif intermédiaire (24) comprend :
un générateur (60) entraîné par ledit moteur (22) permettant de fournir de l'électricité ; et
un moteur électrique (62) entraîné par l'électricité fournie par ledit générateur (60).

37. Système selon la revendication 35, dans lequel ledit dispositif intermédiaire (24) comprend :
une pompe hydraulique (64) entraînée par ledit moteur (22) permettant de fournir le fluide ; et
un moteur hydraulique (66) entraîné par le fluide.

38. Système selon la revendication 35, dans lequel ledit dispositif intermédiaire (24) comprend :
au moins deux trains d'engrenages (50) entraînés par ledit moteur (22) ; et
un embrayage (52) permettant de passer de l'un desdits trains d'engrenages (50) à l'autre desdits trains d'engrenages (50).

39. Système selon la revendication 1, dans lequel :
la source d'alimentation des freins (26) est une source d'électricité et
le contrôleur (30) est une unité de commande électronique.

40. Système selon la revendication 39, dans lequel ledit dispositif intermédiaire (24) comprend :
une pompe hydraulique (64) entraînée par ledit moteur (22) permettant de fournir le fluide ; et
un moteur hydraulique (66) entraîné par le fluide.

41. Système selon la revendication 39, dans lequel ledit dispositif intermédiaire (24) comprend :
au moins deux trains d'engrenages (50) entraînés par ledit moteur (22) ; et
un embrayage (52) permettant de passer de l'un desdits trains d'engrenages (50) à l'autre desdits trains d'engrenages (50).
